# EUROPEAN PATENT SPECIFICATION

(11) **EP 2 715 247 B1**
(45) Date of publication and mention of the grant of the patent: **29.11.2017**
(21) Application number: 12724155.2
(22) Date of filing: 08.05.2012
(51) Int. Cl.: F24J 2/46

(54) **SOLAR COLLECTOR IN A TROUGH (CONTAINER) OF DEEP DRAWING WITH A PARTICULAR FORMING OF THE EDGES**
SONNENKOLLEKTOR IN EINER TIEFZIEHRINNE (BEHÄLTER) MIT EINER BESONDEREN KANTENFORM
CAPTEUR SOLAIRE COMPRENANT UN BAC (CONTENANT) FORMÉ PAR EMBOUTISSAGE PROFOND PRÉSENTANT UNE FORME PARTICULIÈRE DES BORDS

(30) Priority: 23.05.2011 GR 20110100310
(43) Date of publication of application: 09.04.2014
(73) Proprietor: Bazigos, Spyronikolaos, 19600 Mandra Attikis (GR)
(72) Inventor: Bazigos, Spyronikolaos, 19600 Mandra Attikis (GR)
(74) Representative: Mehl-Mikus, Claudia
(86) International application number: PCT/GR2012/000017
(87) International publication number: WO 2012/160396

(56) References cited:
- EP-A1- 1 775 525
- WO-A1-2004/111550
- CN-Y- 201 281 481
- DE-A1- 2 650 143
- GB-A- 2 092 293
- US-A1- 2004 221 524
- US-A1- 2009 025 710

## Description

The present invention refers to a solar collector, composed of a suitably constructed trough, with the suitable forming at the edge of the trough, on which a glass pane is mounted using a double sided adhesive tape. A special forming - groove is formed on the perimeter of the trough. The vacant space in the groove of the trough between the trough and the glass pane can be filled with silicone or any other suitable material. A rubber profile can be mounted on the perimeter of the trough edge, which surrounds both the trough and the glass pane. Furthermore, the trough has an appropriate ventilation system for the concentration of moisture to be avoided.

The present solar collector can be used to produce not only heat but also heat and electric power at the same time, taking advantage of the solar radiation.

All the existing solar collectors have a trough, a glass pane, a sealing flange and a system of fitting and sealing of the glass pane on the trough. A suitable aluminum profile is generally used for the tightening and assembly of the glass pane and the sealing flange on the collector's trough. This leads to the use of a multitude of materials together with the entailing results on both their storage and the cost of the product.

The surface of the trough's edges is invariably flat without any special forming. As a result the edges very little contribute to the rigidity of the trough as a whole and do not have a sufficient topical rigidity. The glass pane is placed in a rubber flange, is seated on the edges of the trough together with the flange and is fitted with the use of the proper aluminum profiles.

To be precise, the patent under the number GR 1006318 refers to a solar collector trough, with holes for the insertion of the pipes and suitable attachments for the sealing of the pipes. The surface of the edges of the trough is flat and the glass pane is fitted with the application of an appropriate sealing profile for the tightening and fitting of the sealing material and the glass pane onto the trough.

The patent under the number DE 10226069 A1 refers to a collector with a trough formed in deep drawing. The trough has two suitable gliders at its bottom with the proper reinforcements for the increase of rigidity. It also refers to perforations of the sides for the fitting of the pipes combined with the gliders at the bottom. The form of the trough edges is flat.

In the currently existing solar collectors regardless of the perfect sealing of the glass pane and the trough's openings for the fitting of the pipes, moisture accumulates in the glass pane, mists its internal surface and results in the decrease of the collector's performance. The troughs of the collectors are manufactured with either the use of individual parts or by forming the sheet metal through deep drawing. On the case of forming the sheet metal through deep drawing there is a press equipped with a suitable forming tool, which forms the trough.

The existing solar collectors of the market convert solar radiation to heat. There are specially constructed hybrid collectors, which produce electric power with photovoltaic cells and at the same time produce heat in the form of warm air or water. US 2009/025710 describes a solar collector according to the preamble of claim 1. The aim of this invention is to present a solar collector, which will be easily put together, will be composed of as few parts as possible, will be produced at low cost, will not present reduced efficiency due to concentrates of moisture in the interior of the glass pane, its trough will be produced with the suitable forming and with the minimum possible cost and will be used for the production of heat, as well as for the concurrent production of heat and electric power.

The solar collector is illustrated in the following figures:
Figure no. 1 illustrates the trough together with the attachments of the pipes inlet and outlet.

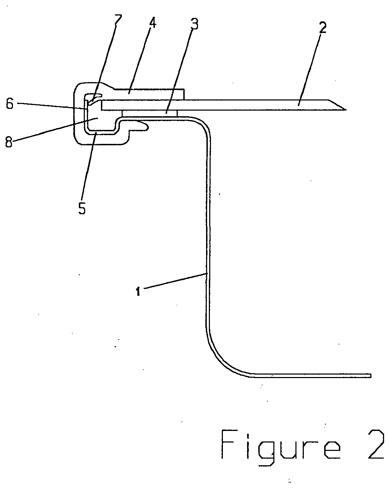

Figure no. 2 illustrates the mounting of the glass pane on the trough.
Figure no. 3 illustrates the attachments of the pipes inlet and outlet.
Figure no. 4 illustrates the attachments of the pipes inlet and outlet in a three-D format.
Figure no. 5 illustrates the route of the vapors from the interior of the collector to the surrounding area.

According to this invention the solar collector is composed of a suitable trough (1), which has accordingly formed edges (5), (6), (10) on its upper part, edges that, apart from the flat part (10) also have a special groove forming (5), (6) along the trough's perimeter. A double sided adhesive tape (3) is applied on the flat part (10) of the trough's (1) edges and the glass pane (2) is applied on this tape (3) in order to be stuck to it.

The vacant space (8) in the groove of the trough and that between the trough and the glass pane can be filled with silicone or some other suitable material to furthermore ensure the avoidance of possible water incoming to the trough.

As a decoration a rubber profile (4) can be applied on the perimeter of the trough, which can enclose the edges of the trough, the edge of the glass pane and the selected groove filling. The rubber profile can have one at least additional edge (7), which acts on the sheet metal of the trough's edge (6) to furthermore seal the interior against water inlet.

The groove forming of the edges (10), (5), (6) increases both the overall and the topical rigidity. This way the thickness of the trough's sheet metal can be decreased. In addition, the flat part of the trough's edge allows the application of a double sided adhesive tape (3), on which the glass pane is mounted and permanently stuck. This results in minimizing not only the materials used but also the manufacture time needed and the production cost of the collector.

The double sided tape (3) is used for the adhesion of the glass pane on the trough (1). Without restriction, any other material capable of spreading on the trough's edges and succeeding in adhering the glass pane can be used instead of a tape, in order to keep the glass pane steadily embodied on the trough and impenetrable of water and moisture.

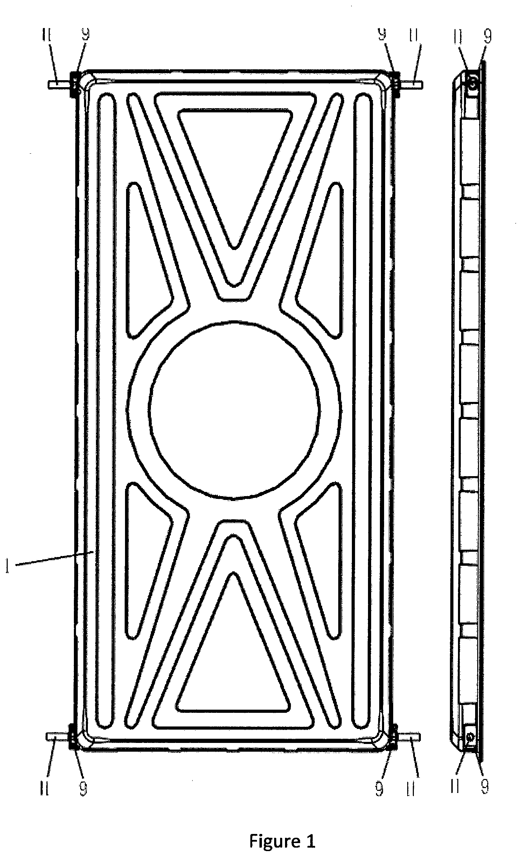

The heat exchanger is located inside the solar collector. It absorbs the heat of the solar radiation and is run through by water. The pipes of water inlet and outlet to the exchanger are located on the upper and lower side corners (9), fig. 1, of the trough. Although different sealing methods are currently used, moisture finds its way into the collector through the inlets and outlets of the heat exchanger's pipes (11). This moisture sits on the interior surface of the glass pane and prevents the access of the solar radiation, reducing the performance of the collector.

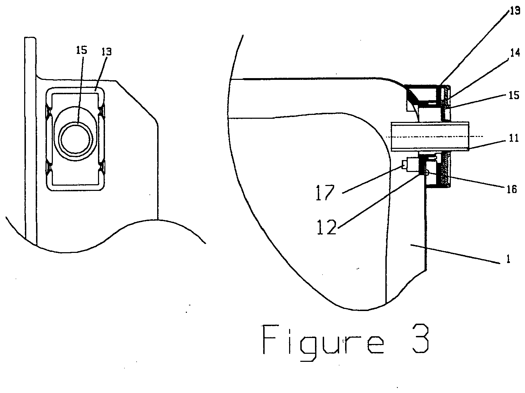

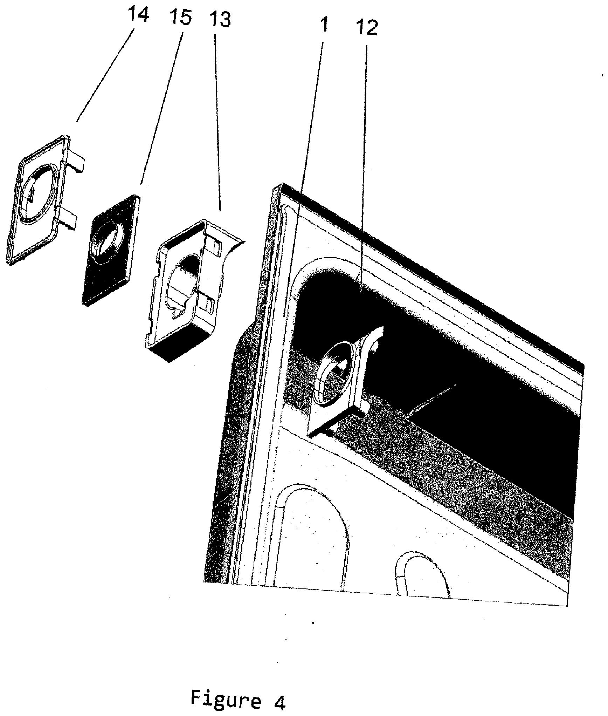

In the presented invention the inlets and outlets of the exchanger's water pipes (11) are sealed with a special attachment (9) fig. 1, fig. 3, fig. 4, fig. 5, which has a rubber element (15) with a hole to help it adhere on the inlet and outlet water pipe (11). The rubber element (15) is fastened into the base (13) with the help of the lid (14). There is enough space into the base (13) for the rubber element (15) to reciprocate.

An element (12) is fitted on the trough (1) through a hole. Bolts (17) are used to fix and stabilize element (12) together with the trough and the base (13).

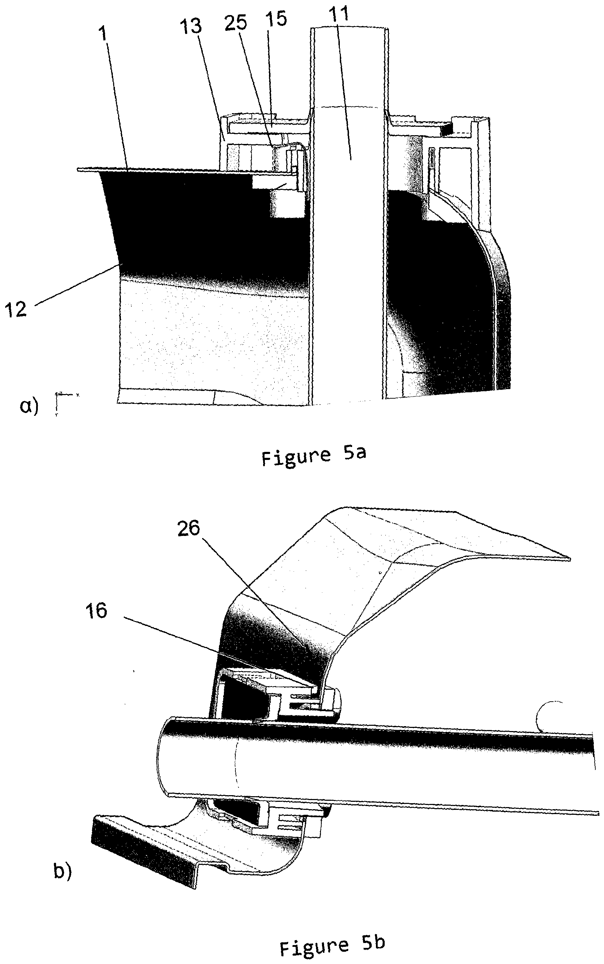

There is a hole (16) on the outer surface of the base (13) to ensure the flow of the air between the interior and the exterior of the collector. The hole (16) is located at the outside bottom of the base (13) to prevent the access of water to the interior. The flow of the air is illustrated in fig. 5a and 5b, which show vertical intersections of the special element (9). The line (25) fig. 5a, illustrates the flow of the air from the interior of the collector through a gap between the element (12) and the pipe (11) to an internal cavity of the base (13). In fig. 5b the line (26) illustrates the flow of the air from the interior of the base (13) to the exterior, through the hole (16). This way, through the maze in the interior of the base (13), air can flow from the collector's interior to the exterior, whereas the inlet of water from the outside to the inside is prevented.

Water that flows into the heat exchanger is heated by the solar radiation. Because of the temperature variations, the exchanger expands during the exposure to the solar radiation and contracts when it ceases to receive it. The expansion and contraction of the inlet and outlet pipes of the exchanger does not affect the solar collector's sealing against water. The water pipes (11) adhere to the rubber element (15), which slides into the base (13), in order to absorb the expansions and contractions of the pipes due to temperature variations, without its sealing capacity being affected.

In this invention the moisture gathered in the interior of the collector is completely removed. As solar radiation heats the surface of the exchanger in the interior of the collector, the air in the collector gets heated and because of its high temperature, its capability to dissolve moisture is increased. As collectors are installed with an inclination in order to receive solar radiation vertically, the increase of temperature due to solar radiation creates a minor air current, which takes the moisture out of the trough. This way, the glass pane does not mist due to concentrations of trapped moisture and the solar collector produces the maximum of its capacity.

The mentioned innovations for the solar collector can be applied in hybrid converters of solar radiation to both electric power and heat. In photovoltaic systems a small percentage of solar radiation is converted into electric power, whereas the rest is converted into heat, which heats the collector. According to the presented invention, the trough equipped with the suitable exchanger, can be used to produce both heat and electric power. The heat exchanger can be covered with photovoltaic elements in order to change a part of solar radiation into electric power and the rest of it into heat, which will be abducted through the water or the air circuit.

According to the present invention, the trough of the solar collector can be manufactured of any material suitable for deep drawing, like steel, stainless steel or aluminum alloy. It can also be manufactured of a synthetic material of little weight and much mechanical durability.

The trough may have different reinforcements both at the bottom and/or the sides, formed at the time of manufacture. This way increased durability and minimum weight are achieved.

The logotype of the producing company can be imprinted on any place on the trough, during the forming process.

The present invention carries the following significant advantages:

The glass pane is fitted on the trough in an extremely simple method, by applying a double sided tape on the trough and pressing the glass pane on the tape.

The trough has the appropriate holes to allow the moisture leave its interior and to maximize performance.

The trough of the collector can either be manufactured with deep drawing, using a material suitable for forming or with the use of presses for synthetic materials. In both cases minimum production cost is achieved.

The trough can be manufactured of any material suitable for forming, like steel, stainless steel or aluminum.

The trough can be manufactured of any synthetic material suitable for presses.

The present invention with all its advantages can be used in solar collectors as well as in hybrid collectors for simultaneous production of electric power and heat.

The present invention is by no means restricted to the described and illustrated implementation, but can be materialized in many forms and sizes, maintaining the protection of the patent.

The kind of materials used in the manufacturing of the invention as well as the dimensions of the individual parts can fulfill the requirements of any special structure.

In each claim, the numbers following technical features mentioned have been used only to ensure the full and complete apprehension of the claims and by no means affect the nature of the parts, which are identified by the numbers' exemplary use.

## Claims

1. Solar collector composed of
- a trough (1) manufactured through deep drawing with a peripheral edge and
- a glass pane (2) placed on the trough (1),
wherein the edge surrounding the trough (1) is composed of a flat part, wherein on the flat part of the edge a double sided tape (3) is applied on which the glass pane (2) is placed and stuck on to, and
wherein a rubber profile (4) is placed on the outside perimeter so as to cover part of the trough's edge and part of the glass pane (2), and
wherein the trough (1) has holes for the inlet and outlet of the water pipes (11),
**characterized in that**
the edge surrounding the trough (1) is composed also of a groove (5, 6) of adequate dimensions in order to provide rigidity to the trough (1) and to create a space for the application of silicone or any other material for additional sealing and
wherein the groove (8) is filled with said material,
wherein attachments (9) with gaps are fitted on the holes to ensure the elimination of moisture through these gaps; and
wherein the attachments (9) of the water inlet and outlet area have gap - holes to allow the flow of air, wherein one gap - hole extends from the interior of the trough around the water pipe (11) to the interior of a base (13) and one gap - hole extends from the interior of the base (13) to the atmosphere, in order to establish an air circuit between the interior of the trough and the atmosphere for the elimination of the moisture.

2. Solar collector according to Claim 1,
**characterized in that**
a groove is formed at the edge of the trough.

3. Solar collector according to Claim 1,
**characterized in that**
the groove (8) at the edge of the trough is filled with silicone or other suitable material for additional protection against the flow of water in the collector's interior.

4. Solar collector according to Claim 1,
**characterized in that**
a rubber profile (4) is fitted around the edge of the collector's trough, wherein said profile (4) partly covers the trough (1) and the glass pane (2) and has at least one edge (7), which acts on the trough's sheet metal.

5. Solar collector according to Claim 1,
**characterized in that,**
suitable attachments (9) are fitted on the inlets and outlets of the water pipes (11), composed of an inside element (12), a base (13) connected to the inside element (12) with bolts (17), which fasten the base (13) together with the element (12) on the trough (1), wherein the rubber element (15) can move inside the base (13) and the lid (14) fastens the rubber element (15), wherein the rubber element (15) has a hole in which the pipe (11) is mounted and wherein the pipe (11) and the rubber element (15) can move, in order to allow the expansion and contraction of the collector preventing any breakage of the collector because of its expansion and contraction.

6. Solar collector according to Claim 1,
**characterized in that**
the trough of the collector is manufactured by deep drawing and is made of steel, aluminum, stainless steel or any other material suitable for deep drawing.

7. Solar collector according to Claim 1,
**characterized in that**
the trough can be made of synthetic or thermoplastic material with casting.

8. Use of a solar collector for simultaneous production of solar energy and heat, wherein said solar collector is a solar collector according to claims 1 to 7.

## Patentansprüche

1. Solarkollektor aufgebaut aus
- einer Wanne (1) hergestellt durch Tiefziehen mit einem umfänglichen Rand und
- einer Glasscheibe (2), die auf die Wanne (1) aufgesetzt ist,
wobei sich der die Wanne (1) umgebende Rand aus einem flachen Abschnitt zusammensetzt, wobei auf dem flachen Abschnitt des Rands ein doppelseitiges Klebeband aufgebracht ist, auf dem die Glasscheibe (2) aufgesetzt und aufgeklebt ist, und
wobei ein Gummiprofil (4) an dem Außenumfang angeordnet ist, so dass ein Teil des Rands der Wanne und ein Teil der Glasscheibe (2) überdeckt ist, und
wobei die Wanne (1) Öffnungen für den Einlass und den Auslass der Wasserleitungen (11) aufweist,
**dadurch gekennzeichnet, dass**
der die Wanne (1) umgebende Rand sich ferner aus einer Nut (5, 6) mit ausreichenden Abmessungen zusammensetzt, um der Wanne (1) Stabilität zu verleihen und um einen Raum für das Auftragen von Silikon oder einem sonstigen Material zur zusätzlichen Abdichtung zu erzeugen, und
wobei die Nut (8) mit diesem Material gefüllt ist,
wobei Befestigungen (9) mit Zwischenräumen an die Öffnungen zum Sicherstellen der Beseitigung von Feuchtigkeit durch diese Zwischenräume angepasst sind; und
wobei die Befestigungen (9) des Wassereinlasses und -auslasses Zwischenraumöffnungen haben, um einen Luftstrom zuzulassen, wobei eine Zwischenraumöffnung sich von dem Inneren der Wanne um die Wasserleitung (11) herum zu dem Inneren eines Grundkörpers (13) erstreckt und eine Zwischenraumöffnung sich von dem Inneren des Grundkörpers (13) zur Atmosphäre erstreckt, um einen Luftkreislauf zwischen dem Inneren der Wanne (1) und der Atmosphäre zur Beseitigung der Feuchtigkeit herzustellen.

2. Solarkollektor nach Anspruch 1,
**dadurch gekennzeichnet, dass**
eine Nut an dem Rand der Wanne geformt ist.

3. Solarkollektor nach Anspruch 1,
**dadurch gekennzeichnet, dass**
die Nut (8) an dem Rand der Wanne mit Silikon oder einem anderen geeigneten Material zum zusätzlichen Schutz gegen das Einströmen von Wasser in den Innenraum des Kollektors gefüllt ist.

4. Solarkollektor nach Anspruch 1,
**dadurch gekennzeichnet, dass**
ein Gummiprofil (4) um den Rand der Wanne des Kollektors angeordnet ist, wobei das Profil (4) teilweise die Wanne (1) und die Glasscheibe (2) überdeckt und zumindest eine Kante (7) hat, die auf das Blech der Wanne wirkt.

5. Solarkollektor nach Anspruch 1,
**dadurch gekennzeichnet, dass**
geeignete Befestigungen (9) an den Einlässen und Auslässen der Wasserleitungen (11) angeordnet sind, aufgebaut aus einem inneren Element (12), einem Grundkörper (13), der über Bolzen (17) mit dem inneren Element (12) verbunden ist, wobei die Bolzen (17) den Grundkörper (13) mit dem Element (12) auf der Wanne (1) befestigen, wobei das Gummi-Element (15) in dem Grundsockel (13) bewegbar ist und der Deckel (14) das Gummi-Element (15) befestigt, wobei das Gummi-Element (15) eine Öffnung hat, in der die Leitung (11) gelagert ist und wobei die Leitung (11) und das Gummi-Element (15) bewegbar sind, um das Ausdehnen und Schrumpfen des Kollektors zu erlauben, dabei Verhindern jeglichen Bruches des Kollektors aufgrund seines Ausdehnung und Schrumpfens.

6. Solarkollektor nach Anspruch 1,
**dadurch gekennzeichnet, dass**
die Wanne des Kollektors durch Tiefziehen hergestellt ist und aus Stahl, Aluminium, rostfreiem Stahl oder einem anderen zum Tiefziehen geeigneten Material besteht.

7. Solarkollektor nach Anspruch 1,
**dadurch gekennzeichnet, dass**
die Wanne aus einem synthetischen oder thermoplastischen Material durch Gießen hergestellt werden kann.

8. Verwendung eines Solarkollektors zur simultanen Erzeugung von Solarenergie und Wärme, wobei der Solarkollektor ein Solarkollektor nach Ansprüchen 1 bis 7 ist.

## Revendications

1. Collecteur solaire composé de :
- une gouttière (1) fabriquée par emboutissage profond présentant un bord périphérique et
- une plaque de verre (2) placée sur la gouttière (1),
le bord entourant la gouttière (1) est composé d'une partie plate et, dans lequel sur la partie plate du bord, on applique un ruban à double face (3) sur lequel la plaque de verre (2) est placée et collée, et
dans lequel un profil caoutchouteux (4) est placé sur le périmètre extérieur de façon à couvrir une partie du bord de la gouttière et une partie de la plaque de verre (2), et
dans lequel la gouttière (1) présente des trous pour l'entrée et la sortie des conduites d'eau (11), et
**caractérisé en ce que** le bord entourant la gouttière (1) est également composé d'une rainure (5, 6) de dimensions adéquates afin de fournir une rigidité à la gouttière (1) et de créer un espace pour l'application de silicone ou d'un autre matériau pour renforcer l'étanchéité, et dans lequel la rainure est remplie dudit matériau ;
dans lequel des fixations (9) pourvues d'intervalles sont ajustées sur les trous pour garantir l'élimination de l'humidité à travers ces intervalles ; et
dans lequel les fixations (9) de l'entrée d'eau et de la zone de sortie présentent un intervalle-des trous pour permettre le flux d'air, dans lequel un intervalle-trou s'étend de l'intérieur de la gouttière autour de la conduite d'eau (11) à l'intérieur d'une base (13) et un intervalle-trou s'étend de l'intérieur de la base (13) à l'atmosphère, afin d'établir un circuit d'air entre l'intérieur de la gouttière et l'atmosphère en vue d'éliminer l'humidité.

2. Collecteur solaire selon la revendication 1,
**caractérisé en ce que**
une rainure est formée au bord de la gouttière.

3. Collecteur solaire selon la revendication 1,
**caractérisé en ce que**
la rainure (8) au bord de la gouttière est remplie de silicone ou d'un autre matériau approprié permettant une protection supplémentaire contre le flux d'eau à l'intérieur du collecteur.

4. Collecteur solaire selon la revendication 1,
**caractérisé en ce que**
un profil caoutchouteux (4) est ajusté autour du bord de la gouttière du collecteur, dans lequel ledit profil (4) recouvre en partie la gouttière (1) et la plaque de verre (2) et présente au moins un bord (7), qui agit sur la feuille métallique de la gouttière.

5. Collecteur solaire selon la revendication 1,
**caractérisé en ce que**
des fixations appropriées (9) sont ajustées sur les entrées et les sorties des conduites d'eau (11), composées d'un élément intérieur (12), d'une base (13) reliée à l'élément intérieur (12) par des boulons (17), qui fixent la base (13) avec l'élément (12) sur la gouttière (1), dans lequel l'élément caoutchouteux (15) peut se déplacer à l'intérieur de la base (13) et le couvercle (14) fixe l'élément caoutchouteux (15), dans lequel l'élément caoutchouteux (15) présente un trou dans lequel la conduite (11) est montée et dans lequel la conduite (11) et l'élément caoutchouteux (15) peuvent se déplacer, afin de permettre l'expansion et la contraction du collecteur, ce qui empêche toute rupture du collecteur en raison de son expansion et de sa contraction.

6. Collecteur solaire selon la revendication 1,
**caractérisé en ce que**
la gouttière du collecteur est fabriquée par emboutissage profond et est composée d'acier, d'aluminium, d'acier inoxydable ou de tout autre matériau adapté à l'emboutissage profond.

7. Collecteur solaire selon la revendication 1,
**caractérisé en ce que**
la gouttière peut être composée d'un matériau de moulage thermoplastique ou synthétique.

8. Utilisation d'un collecteur solaire permettant une production simultanée d'énergie et de chaleur solaire, dans lequel ledit collecteur solaire est un collecteur solaire selon les revendications 1 à 7.
